# EUROPEAN PATENT SPECIFICATION

(11) **EP 1 700 050 B1**
(45) Date of publication and mention of the grant of the patent: **22.07.2009**
(21) Application number: 03819239.9
(22) Date of filing: 30.12.2003
(51) Int. Cl.: F16D 65/097

(54) **PAD SPRING OR RESILIENT MEMBER FOR A DISC BRAKE**
BELAGFEDER ODER ELASTISCHES GLIED FÜR EINE SCHEIBENBREMSE
RESSORT DE PATIN OU ORGANE ELASTIQUE POUR FREIN A DISQUE

(43) Date of publication of application: 13.09.2006
(73) Proprietor: Freni Brembo S.p.A., 24035 Curno (Bergamo) (IT)
(72) Inventor: SCHORN, Michael, I-20050 Camparada (IT); TIRONI, Giovanni, Mario, I-24044 Dalmine (IT); ONGARETTI, Enrico, Battista, I-24064 GRUMELLO DEL MONDE (BERGAMO) (IT); SALA, Paolo, I-24030 Villa D'Adda (IT)
(74) Representative: Siniscalco, Fabio
(86) International application number: PCT/IT2003/000875
(87) International publication number: WO 2005/064194

(56) References cited:
- PATENT ABSTRACTS OF JAPAN vol. 2000, no. 08, 6 October 2000 (2000-10-06) -& JP 2000 145835 A (AKEBONO BRAKE IND CO LTD), 26 May 2000 (2000-05-26)

## Description

This invention relates to a spring or resilient member for a disc brake.

In particular this invention relates to a spring which is designed to be placed between a pad and a calliper body to exert a force on the pad with components directed towards the axis of rotation of the disc and the other spring acting on the same pad.

Springs of the known art have a number of disadvantages in that despite their presence the pads are generally subjected to annoying vibrations, chattering and noise which occur in particular during the stage in which the pad comes into contact with the disc and light braking.

JP 2000 145835 discloses a spring according to the preamble of Claim 1.
The problem underlying this invention is that of providing a spring for a disc brake which has structural and functional characteristics such as to overcome the aforesaid disadvantages relating to the known art.

This problem is resolved through a spring according to claim 1.

Other advantages and characteristics of the present invention will become clear from the following detailed description which is given with reference to the appended drawings which are provided purely by way of non-limiting example and in which:

Figure 1 shows a perspective view of a calliper body for a disc brake according to this invention,

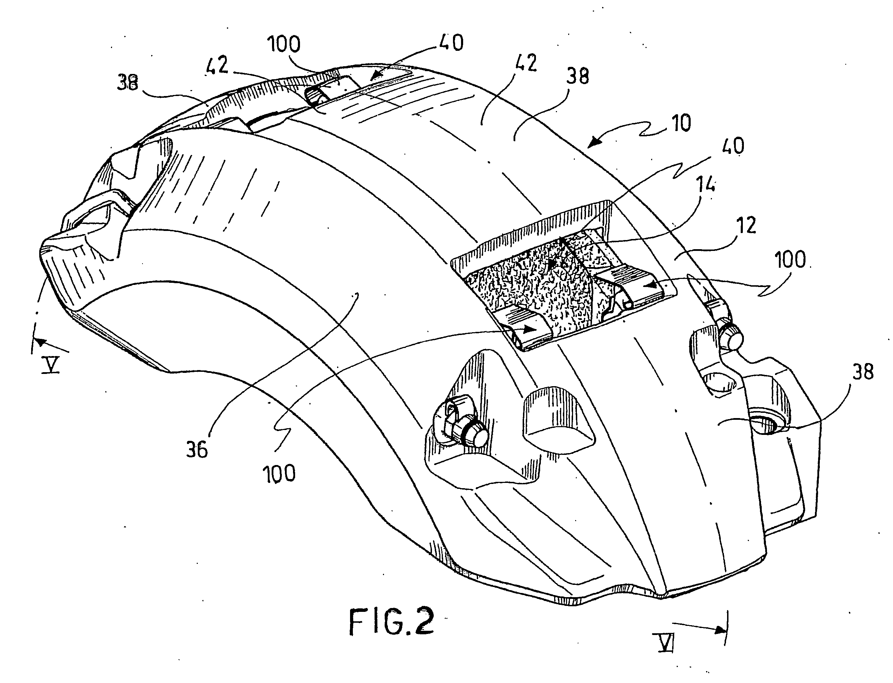

Figure 2 illustrates a perspective view of a calliper for a disc brake according to this invention,

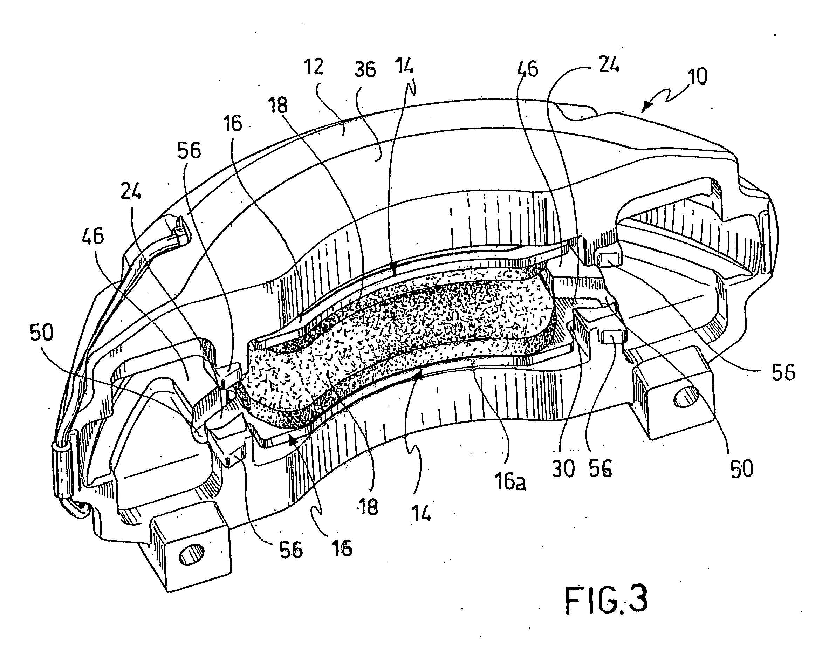

Figure 3 illustrates a perspective view of the body in Figure 2 from a different angle and fitted with pads,

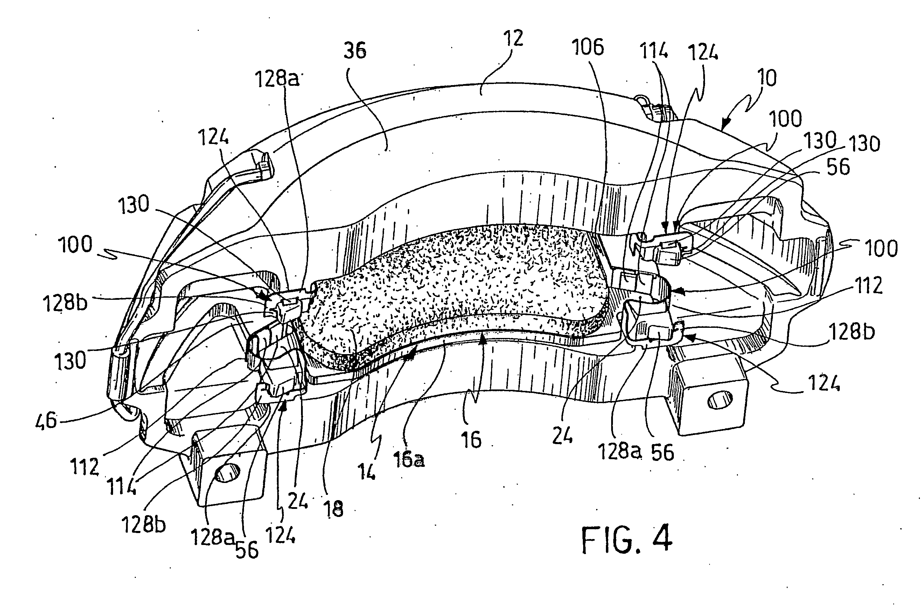

Figure 4 illustrates a perspective view of the calliper in Figure 2 from a different angle,

Figure 5 illustrates the body in Figure 2 with a fitted pad in a cross-sectional view along a plane indicated by the line V-V on the body in Figure 2,

Figure 6 illustrates the calliper in Figure 5 with two springs and one pad,

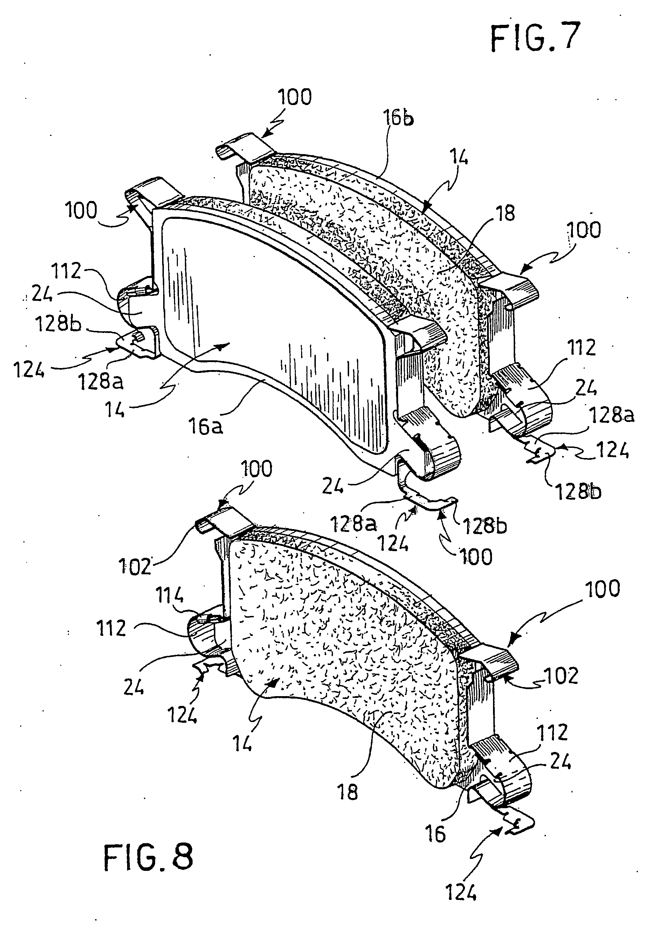

Figure 7 illustrates a perspective view of two pads facing each other with corresponding springs according to this invention,

Figure 8 illustrates a perspective view of one of the two pads in Figure 7 with corresponding springs according to this invention,

Figure 9 illustrates a perspective view of two pads facing each other according to this invention,

Figure 10 illustrates a perspective view of one of the two pads in Figure 9 according to this invention,

Figures 11-14 illustrate perspective views from different angles of a spring according to the invention,

Figure 15 illustrates a perspective view of an enlarged detail of a calliper for a disc brake according to this invention,

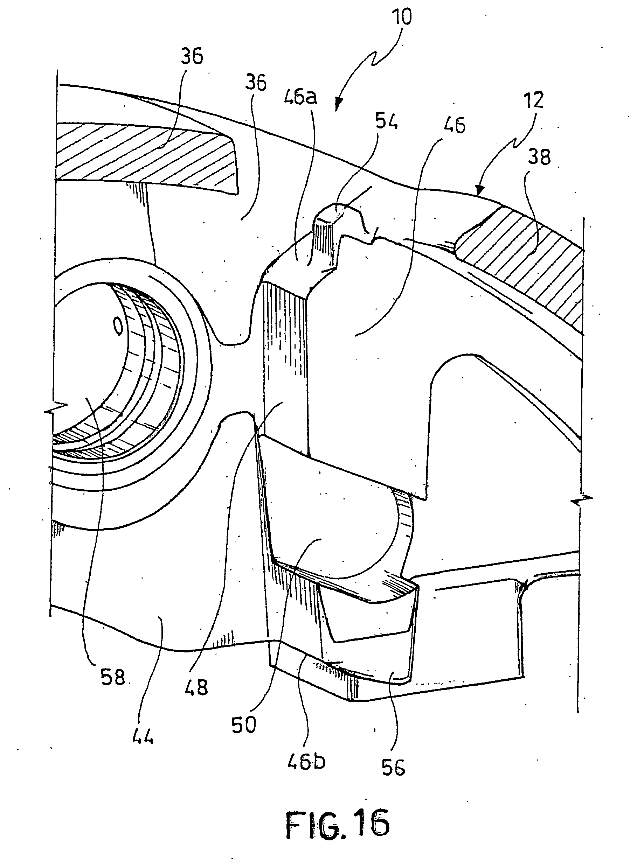

Figure 16 illustrates a perspective view of an enlarged detail of a body of a calliper for a disc brake according to this invention,

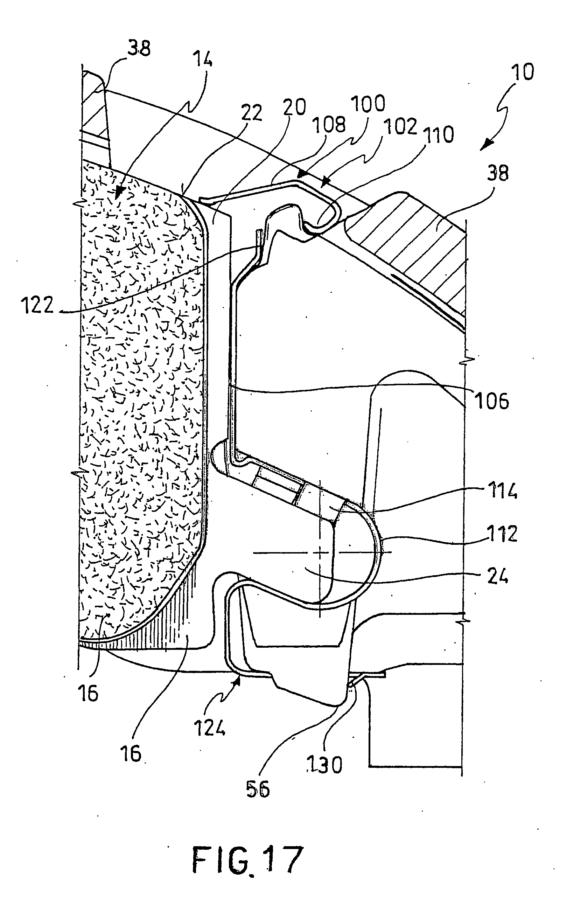

Figure 17 illustrates an enlarged detail of the cross-section in Figure 6,

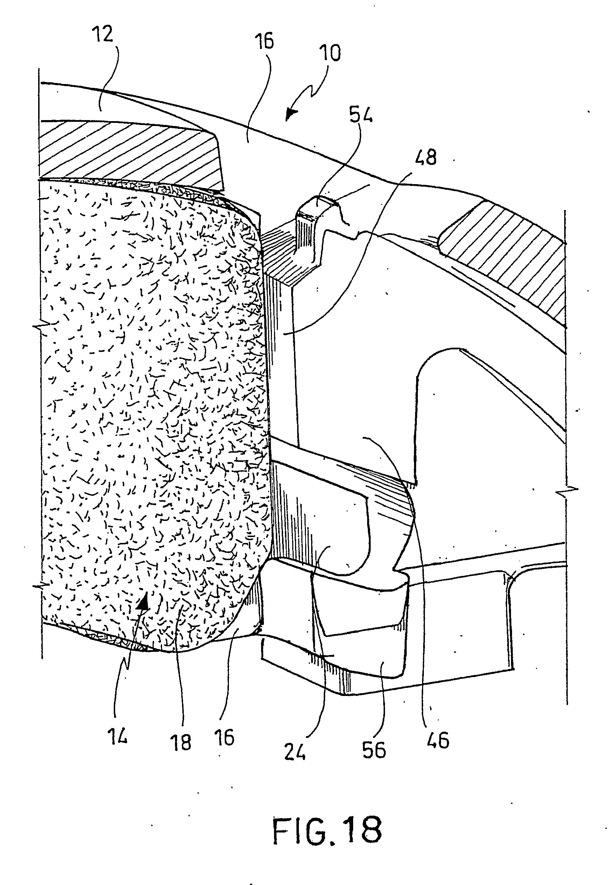

Figure 18 illustrates a perspective view of an enlarged detail of a body of a calliper for a disc brake with a pad fitted, according to this invention,

Figure 19 illustrates a perspective view of an enlarged detail of a body of calliper for a disc brake with a spring fitted, according to this invention.

With reference to the abovementioned figures, 10 indicates a calliper of a disc brake as a whole. Conventionally a disc brake comprises a disc, not shown, mounted on the hub of the wheel of a vehicle and a calliper mounted on a non-rotating portion of the vehicle, for example a suspension, so as to straddle the disc when the disc brake is assembled on the vehicle.

Conventionally the disc and the vehicle wheel define an axis of rotation, not shown. The definitions of the radial direction r and the circumferential or tangential direction t used below with reference to the assembled condition of the disc brake relate to the axis of rotation of the disc. Also, considering a radial vector r which has its origin at the axis of rotation of the disc and moves away from the axis of rotation of the disc, a portion of the brake is inner with respect to a reference if it is closer to the axis of rotation of the disc than the reference, and outer if it is further away from the axis of the rotation of the disc and the reference.

Calliper 10 comprises a body 12 which can be mounted on the vehicle in a fixed way, as in the situation illustrated in the figures, or in a floating way as is conventionally known in the art. This invention may apply to both of the circumstances indicated above.

Body 12 is designed to receive at least two pads 14 which are arranged facing each other and at a specific distance from each other in such a way that in the disc brake assembly the disc lies between the two pads and therefore the two pads face each other against opposite braking surfaces of the disc.

A pad 14 comprises a supporting plate 16 to which a layer of friction material 18 is applied.

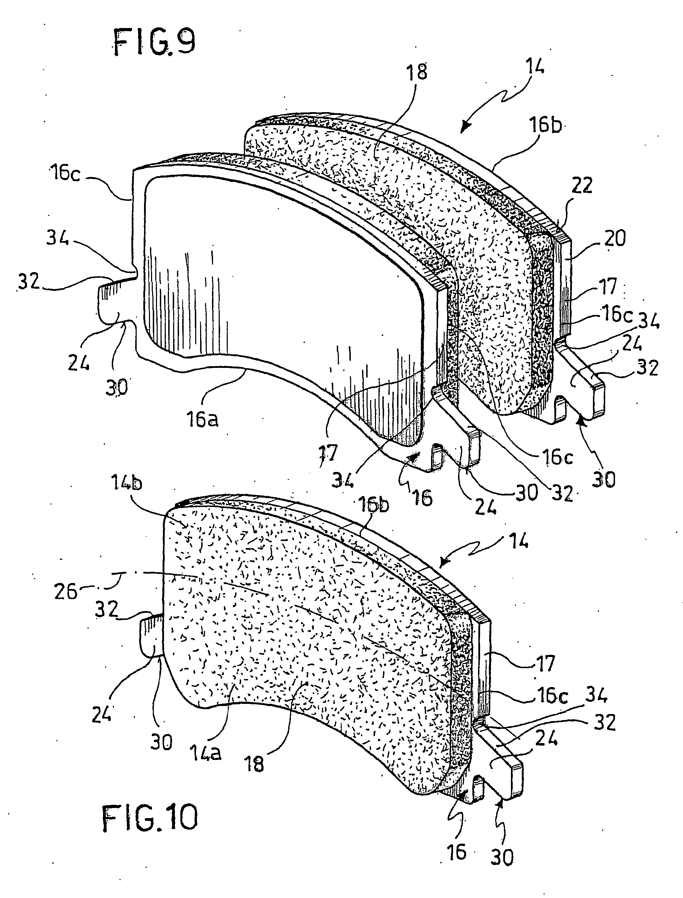

Figures 9 and 10 illustrate an embodiment of a pad according to this invention. With reference to the assembled configuration of the calliper and the disc brake, the supporting plate has an inner edge 16a, an outer edge 16b and two opposite sides 16c. With reference to supporting plate 16 which is mounted on the body of the calliper, inner edge 16a is substantially represented by the concave edge, outer edge 16b is substantially represented by the convex edge and opposite sides 16c connect the inner edge and the outer edge. The convex edge and the concave edge are preferably arcuate according to a portion of circumference which is substantially coaxial with the disc.

The characteristics of the pad will be described below with reference to the axis of rotation of the disc and therefore a radial direction r and a tangential direction t as defined above. The radial direction r and the tangential direction t also refer to the pad when not mounted on the body of the calliper, the radial direction r being regarded as being a line passing through a median point of inner edge 16a and outer edge 16b, or the arcuate edges of the pad, and the tangential direction t is regarded as being a portion of the circumference passing through the centre of gravity of the pad and substantially concentric with inner edge 16a and outer edge 16b of the pad.

Advantageously supporting plate 16 has an extension in the tangential direction t which is greater than the tangential extension of the corresponding layer of friction material 18. In other words plate 16 has extensions 20 which extend on both sides of the friction material in a tangential direction. Again in other words, inner edge 16a and outer edge 16b of supporting plate 16 are larger than the corresponding edges of friction material 18.

Each of the two extensions defines a bearing surface 22 for a spring or resilient member as will be described below. This bearing surface 22 faces the outside of the body of the calliper when the pad is mounted thereon. In other words, bearing surface 22 comprises an end portion of the supporting plate defining outer edge 16b.

According to a possible embodiment, extensions 20 extend over the full height of the plate or all its extension in a substantially radial direction r or, again in other words, the extension of its opposite sides 16c.

According to a possible embodiment, supporting plate 16 advantageously comprises two wings 24 which extend in a substantially tangential direction t. Each of the wings extends from one of the opposite sides 16c of supporting plate 16 away from friction material 18, from extensions 20 if provided.

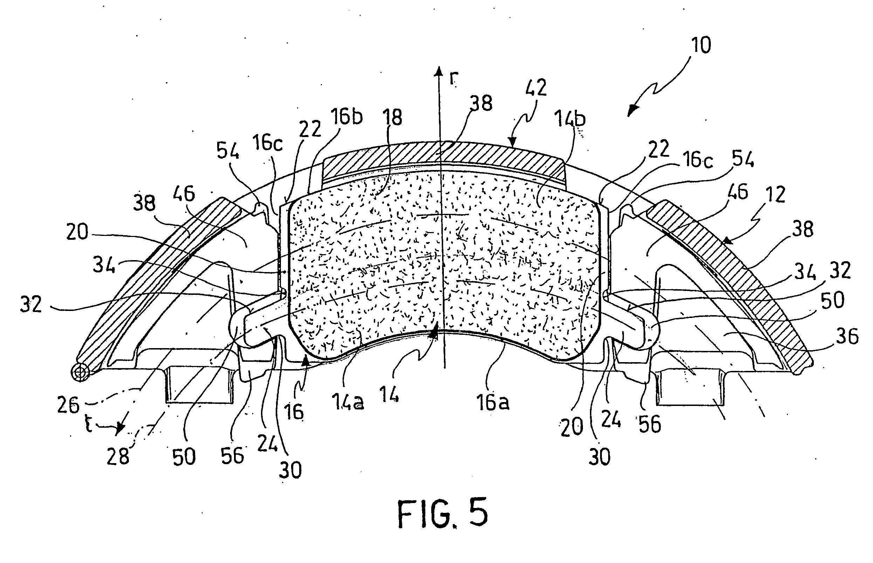

26 indicates a baricentric circumference of the pad, that is a circumference defined as above with reference to the reference system relating to the pad or defined as the circumference having its centre on the axis of rotation of the disc and passing approximately through the centre of gravity of pad 14. The baricentric circumference theoretically divides the pad into a first portion 14a, or inner portion, located on the side of the axis of rotation of the disc with respect to baricentric circumference 26, and a second portion 14b, or outer portion, located on the side opposite the axis of rotation of the disc with respect to the baricentric circumference 26 (as illustrated by way of example in Figure 5).

According to a possible embodiment, wings 24 extend away from friction material 18 from first portion 14a, that is from the portion closest to the axis of rotation of the disc with respect to baricentric circumference 26. With reference to a reference system relating to the pad alone, wings 24 extend away from friction material 18 from first portion 14a, that is from the portion of the pad comprising inner edge 16a.

According to a possible embodiment, wings 24 are inclined with respect to sides 16c of supporting plate 16 and preferably in such a way as to lie along a circumference 28 which has its centre on the axis of rotation of the disc and passes through a median line of wings 24. In other words, with reference to the pad when not assembled to the body of the calliper, wings 24 are inclined with respect to the opposite sides 16c of the supporting plate and preferably in such a way as to lie along a circumference 28 which is closer to inner concave edge 16a than baricentric circumference 26.

30 and 32 indicate two bearing surfaces of wings 24, which are inner and outer respectively with respect to a radial direction r directed away from the axis of rotation of the disc.

According to a possible embodiment, between wings 24 and supporting plate 16, and in particular extensions 20, there is provided at least one discharge groove 34. In the situation where the wings are inclined, discharge groove 34 is preferably made at an obtuse angle between outer bearing surface 32 and the sides 16c of supporting plate 16.

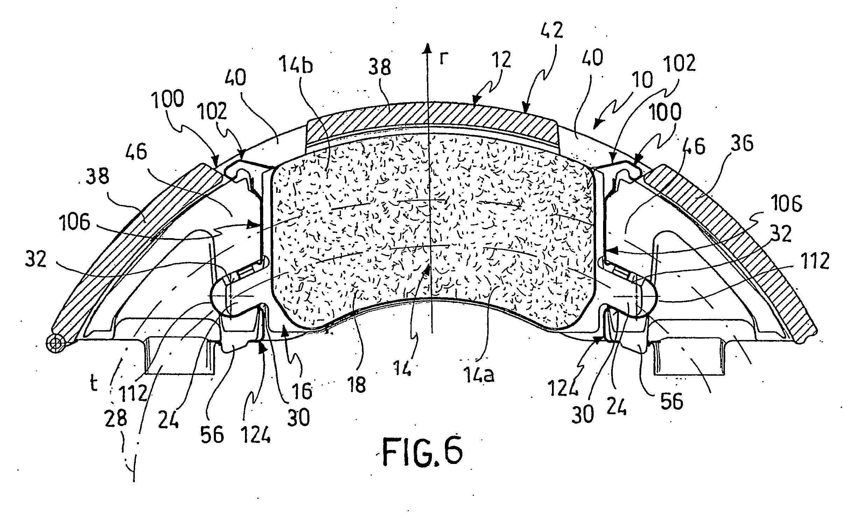

Body 12 may be constructed as a single body or as assembled parts. According to a possible embodiment, body 12 has a configuration such as to substantially provide two side walls 36 located on opposite sides of the disc joined by connecting members 38 which extend substantially transversely to the disc and walls 36. According to a possible embodiment illustrated for example in the figures (in particular Figures 5 and 6), connecting members 38 comprise arcuate walls along a circumference coaxial with the disc spaced apart by opening 40. The radial extension of connecting members 38 is preferably small in comparison with the tangential or angular extension of the same.

Considering the definition of the radial and tangential directions indicated above, and also with reference to body 12, it is possible to identify inner or outer portions. By outer portions are meant portions which are designed to be located further from the axis of rotation of the disc than a median line passing tangentially through the body, for example with respect to the baricentric circumference defined above for the pads. Similarly by inner portions are meant portions which are designed to be located closer to the axis of rotation of the disc than a median line passing tangentially through the body, for example with respect to the baricentric circumference defined above for the pads.

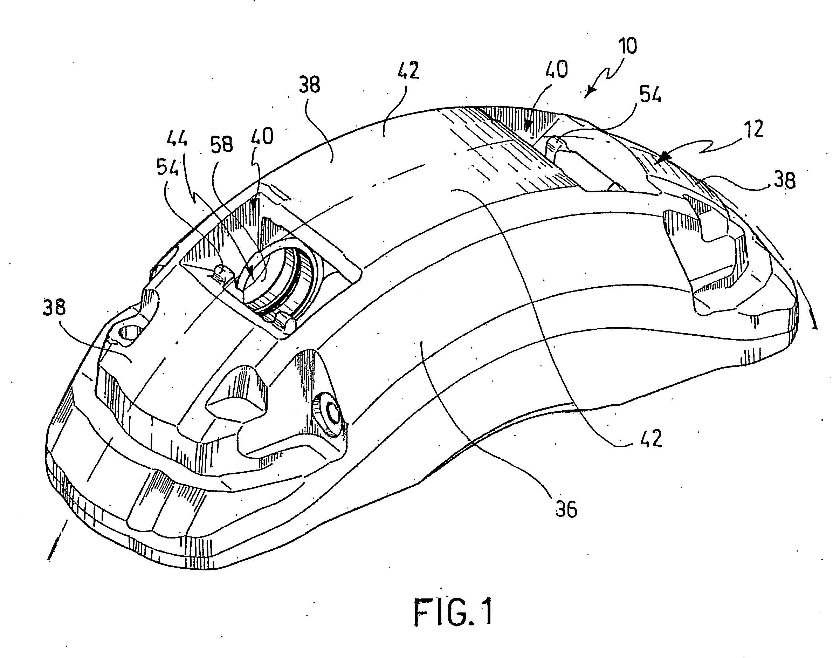

Body 12 comprises two portions 42 or halves located on opposite sides of the disc and bounded for example by the line of the plane indicated by v-v in Figure 1. The two portions 42 may be merely theoretical, where the body is constructed as a single piece, or may correspond to two separate components of the calliper body. For example Figure 5 illustrates one of such portions of a body constructed as a single part and cross-sectioned along the plane of the line V-V in Figure 1, that is along a plane parallel to the disc (or perpendicular to the axis of rotation of the disc) and which is a median plane with respect to the body of the calliper.

With reference to the appended figures, each portion of body 12 has at least one seat 44 to house at least one pad. In the situation illustrated in the figures one pad and one housing seat are provided for each portion of the body. Obviously several seats or several pads may be provided for each portion of the calliper body, for example two seats for two separate pads.

With reference for example to Figure 5 or 6, housing seat 44 is bounded externally by a connecting member 38 and laterally by containment walls 46 which extend substantially in a perpendicular direction from side walls 36 of the calliper body towards the disc in the assembled configuration of the disc brake. 48 indicates contact surfaces of containment walls 46 which lie opposite lateral surfaces 17 of supporting plate 16.

According to a possible embodiment, advantageously provided in the situation where supporting plates 16 for pads 14 are provided with wings 24, a containment wall 46 has a housing 50 to receive a corresponding wing 24. Advantageously housings 50 have a shape which matches corresponding wing 24 in such a way that it can be received within them. Preferably housing 50 has larger dimensions than the corresponding dimensions of the corresponding wing. In particular housing 50 has dimensions in a substantially radial direction which are greater than the corresponding dimensions of the corresponding wing.

According to a possible embodiment each containment wall 46 has an outer surface 46a with reference to radial direction r, that is a surface which is substantially perpendicular to side walls 36 of the body and located in an outer portion of the body with reference to the radial direction and the axis of rotation of the disc as previously defined.

Outer surface 46a is an extension of contact surface 48 and is preferably inclined with respect thereto towards the outside of the calliper body, away from housing seat 44 in both a radial direction and a tangential direction.

According to a possible embodiment, each containment wall 46 has an inner surface 46b, that is a surface substantially perpendicular to side walls 36 of the body and located in an inner portion of the body with reference to the radial direction and the axis of rotation of the disc as defined above.

Inner surface 46b is preferably located in a direction substantially perpendicular to contact wall 48.

According to a possible embodiment, body 12 comprises securing members for resilient members or springs located between body 12 and pad 14 as will be described below.

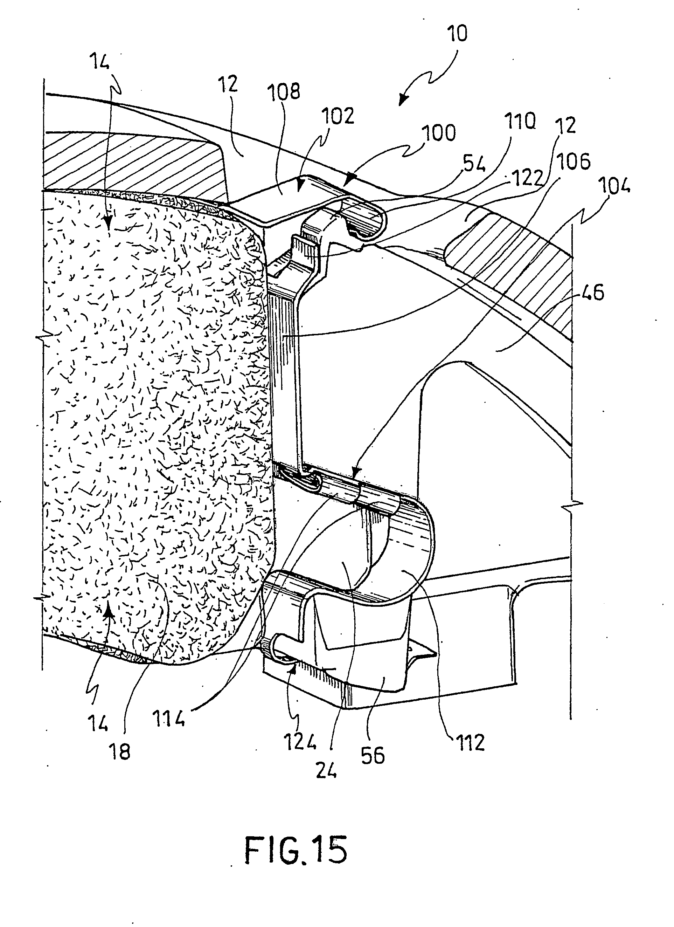

With reference to a portion 42 of body 12, illustrated for example in Figure 15, the securing members are preferably shaped in such a way as to prevent the springs from moving in a direction parallel to the axis of rotation of the disc, in particular towards the other pad or towards the disc itself. In other words the securing members are advantageously shaped in such a way as to immobilise the springs between the side wall 36 of portion 42 of the calliper body and the securing members themselves. In addition to this the calliper body is configured in such a way as to immobilise the springs in radial direction r too, that is it is provided that outer surface 46a and inner surface 46b define contact surfaces for the springs in such a way as to secure them radially both away from and close to the axis of rotation of the disc. Furthermore, depending upon the conformation of the springs, the securing members are capable of preventing movement by the springs in a circumferential or tangential direction.

As will be described below, the securing members are structured in such a way as to immobilise the two extremities of the resilient members corresponding to an inner portion and an outer portion respectively of the calliper body.

Advantageously the securing members comprise an outer tooth 54 which extends from the body in an outer portion with respect thereto and extends along the radial vector r as defined above. Outer tooth 54 is located at a specific distance from side wall 36. Preferably outer tooth 54 extends from a containment wall 46 of housing seat 44 defining a seat to receive a portion of the spring between side wall 36 and the outer tooth. In the embodiment illustrated in the figures outer tooth 54 extends from outer surface 46a of containment surface 46 defining the seat to house the spring between side wall 36, outer surface 46a and outer tooth 54.

According to a possible embodiment, two outer teeth 54 are provided on opposite sides of pad 14, preferably corresponding to containment walls 46 which bound seat 44 housing the pad.

According to a possible embodiment, with reference to one of the portions of the calliper body, the securing members comprise an inner tooth 56 which extends from the body, in an inner portion thereof, and which extends in a direction opposite to the direction of radial vector r as defined above. Inner tooth 56 is located at a specific distance from side wall 36. Preferably inner tooth 56 extends from a containment wall 46 of housing seat 44 defining a seat to receive a portion of a spring between side wall 36 and the inner tooth itself. In the embodiment illustrated in the figures, inner tooth 56 extends from inner surface 46b of containment surface 46 defining the seat for housing the spring between side wall 36, inner surface 46b and inner tooth 56.

According to a possible embodiment two inner teeth 56 are provided from opposite sides of pad 14, preferably corresponding to containment walls 46 which bound seat 44 housing the pad.

Body 12 is also designed to receive means to press the pad against the disc during the action of braking the vehicle. These means are not illustrated in detail but may comprise for example pistons which are activated hydraulically or by means of electric motors.
Figure 1 shows a perspective view of body 12 of the calliper from an angle which shows an opening 58 for housing one of the pistons, not shown, which is capable of interacting with the corresponding pad, which is also not shown in Figure 1.

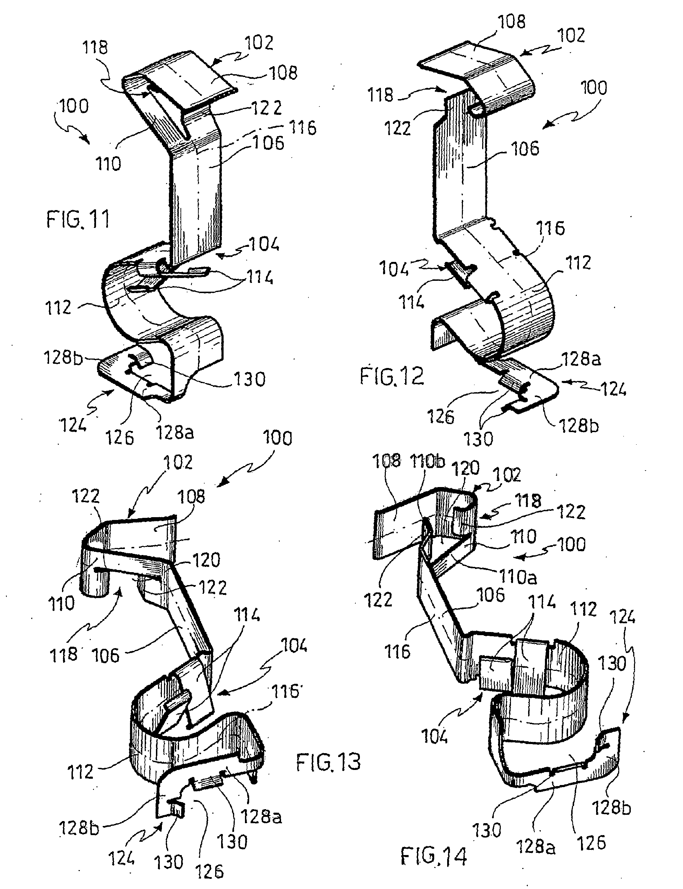

A resilient member 100 or spring according to this invention which can be mounted on a calliper body for example as previously described between a side 16c of supporting plate 16 and the body itself is illustrated with particular reference to Figures 11-14.

According to a possible embodiment, spring 100 comprises a cut and bent blade which can be located between pad 14 and body 12 of the calliper to hold the pad compressed between two elastic members 100 and against the walls of body 12 of the calliper.

In particular spring 100 comprises at least two thrust portions capable of interacting with supporting plate 16 for pad 14 transmitting a force thereto with components directed towards the axis of rotation of the disc and towards the opposite spring acting on the pad.

A first thrust portion 102 preferably corresponds to one extremity of the spring and in particular the outer extremity of the spring with reference to the spring assembled on the calliper body, and is suitable for acting on an outer bearing surface of the pad, for example bearing surface 22 of extensions 20. A second thrust portion 104 preferably corresponds to a central portion of the spring and is suitable for acting on outer bearing surface 32 of a wing 24 of supporting plate 16.

According to a possible embodiment a spring or resilient member 100 comprises a base portion 106 which can be located between one side 16c of the supporting plate and the corresponding containment wall 46 of seat 44 housing the pad.

According to a possible embodiment first thrust portion 102 and second thrust portion 104 obtained by bending the blade forming resilient member 100 diverge from opposite sides of base portion 106, preferably without any break in continuity.

Considering spring 100 assembled on the calliper body, first thrust portion 102 comprises an inclined wall 108 which is suitable for bearing on bearing surface 22 of supporting plate 16 and is connected to base portion 106 through a bent connecting portion 110 and which extends away from base portion 106 and the pad in a radial (outward) and tangential direction. According to a possible embodiment base portion 106, connecting portion 110 and inclined wall 108 define a hook-shaped length which bears on the plate from above, in particular on bearing surface 22, exerting thereupon a force with components towards the axis of rotation of the disc and towards the other spring acting on the same pad. In other words, connecting portion 110 is suitable for displacing the point from which inclined wall 108 extends from connecting portion 110 to a more outer zone, radially and tangentially further from the pad with respect to base portion 106 in such a way as to form a resilient length which presses the pad inwards against the calliper body and tangentially between the two springs acting on the pad.

According to a possible embodiment, first thrust portion 102 has a "C"-shaped length which extends substantially from one side of base portion 106, preferably from a flat length of the base portion. The free extremity of first thrust portion 102, that is the extremity capable of interacting with supporting plate 16, is located opposite the remaining first thrust portion with respect to base portion 106.

Second thrust portion 104 extends from base portion 106 on the opposite side with respect to first thrust portion 102. According to a possible embodiment the second thrust portion corresponds to a central portion of spring 100 and is suitable for acting on a central length of side 16c of supporting plate 16. In the case where the plate comprises wings 24 which extend laterally therefrom, base portion 106 comprises a loop 112 which is suitable for enclosing a corresponding wing 24. In this case second thrust portion 104 is advantageously constructed from the length of the spring defining loop 112. Advantageously second thrust portion 104 is capable of exerting a force on bearing surface 32 of corresponding wing 24.

According to a possible embodiment, loop 112 of spring 100 has in the portion facing wing 24 at least one tang 114 which extends in a direction transverse to a line of curvilinear shape 116 defining the overall line of the spring. Preferably two tangs which extend from opposite sides of line 116 are provided and even more preferably they are offset along this overall line. The two tangs 114 are capable of being bent through approximately 180° as illustrated in the appended figures. With reference to the assembled disc brake the two tangs are bent through approximately 180°C towards the axis of rotation of the disc so as to bear and be compressed against supporting wall 32 of corresponding wing 24 pressing it inwards against containment wall 46 within housing 50. In other words tangs 114 are bent through approximately 180° with respect to base portion 106 towards the concave part of loop 112.

Loop 112 envelops corresponding wing 24 in such a way as to be inserted between bearing surface 30 and containment wall 46 in such a way that tangs 114 press wing 24 against the inner portion of loop 112.

According to the invention spring 100 comprises portions which hook on to the calliper body, preferably designed to act together with the members securing the calliper body as described above.

According to the invention, a first hooking portion 118 is formed from a length of first thrust portion 102 and in particular connecting portion 110. In other words connecting portion 110 can be inserted between outer tooth 54 and side wall 36 immobilising spring 100 in a direction parallel to the axis of rotation of the disc. Again in other words, connecting portion 110 lies parallel to outer surface 46a of containment wall 46 between side wall 36 and outer tooth 54. According to a possible embodiment, first hooking portion 118 is shaped in such a way as to envelop outer tooth 54 on three sides immobilising movement of the outer extremity of spring 100 in a tangential direction with respect to the calliper body. Preferably connecting portion 110 has dimensions similar to those of base portion 106 and inclined wall 108 in a direction parallel to the axis of rotation of the disc, that is transverse to the overall line 116 of the spring, and is cut in such a way as to form an opening 120 to house outer tooth 54. Even more preferably connecting portion 110 also comprises bent lengths 122 which at least partly bound opening 120 and can be located on the sides of outer tooth 54, preferably on the two opposite sides of outer tooth 54.

According to a possible embodiment, opening 120 has an extension which is smaller than the width of connecting portion 110 in a direction transverse to overall line 116 and is open on one side of connecting portion 110, for example that opposite the disc in the assembled configuration of the calliper.

In other words connecting portion 110 has a first line of cut 110a which extends parallel to an overall line 116 of the shape of spring 100 over a length such as to affect the extension of outer tooth 54. In this way connecting portion 110 is divided into two lengths, preferably of equal width, of which that which is intended to be located closer to the disc has a further line of cut 110b perpendicular to line of cut 110a and overall line 116 which affects the full width of that length. The other line of cut 100b is located approximately in a median position with respect to first line of cut 110a with the result that line of cut 110a and the other line of cut 110b define a "T"-shaped cut in connecting portion 110 which bounds bent lengths 122.

According to the invention, a second hooking portion 124 is defined by a portion of the inner extremity of spring 100 which extends from base portion 106 and in particular from loop 112, if present. In other words second hooking portion 124 is capable of being inserted between inner tooth 56 and side wall 36 of the calliper body immobilising the inner extremity of spring 100 in a direction parallel to the axis of rotation of the disc. According to a possible embodiment, second hooking portion 124 extends with continuity from base portion 106 or loop 112, if present, bending substantially into an "L"-shape to lie parallel to the inner surface 46b of containment wall 46. According to a possible embodiment, second hooking portion 124 has smaller dimensions that that of base portion 106 in a direction parallel to the axis of rotation of the disc, that is transverse to the overall line 116 of the spring, being cut in such a way as to form an opening 126 to house inner tooth 56 immobilising movements of the, inner extremity of spring 100 in a tangential direction. Preferably second hooking portion 124 is cut in an "L" shape with a first limb 128a of the "L" being capable of being located between inner tooth 56 and side wall 36 of the calliper body, and a second limb 128b of the "L" being capable of enveloping one side of inner tooth 56. In other words the first limb of the "L" is parallel to overall line 116 while the second limb of the "L" is transverse to the overall line 116 of the spring.

Second hooking portion 124 also comprises bent lengths 130 which at least partly bound opening 126 corresponding to inner tooth 56. Bent sections 130 are capable of being located on the sides of inner tooth 56. Preferably two bent lengths 130 capable of being located on the two adjacent sides of inner tooth 56 are provided.

With reference to Figures 6 and 11-14, spring 100 extends predominantly along overall line 116. Considering as a reference the flat length of base portion 106, the outer hook-shaped portion and loop 112 extend from the same side while the free extremities of the spring are located on opposite sides.

According to a possible embodiment, spring 100 has a width, that is a dimension in a direction transverse to overall line 116, which is substantially constant along that overall line except for the two hooking portions whose dimensions are suitable for inserting the length of spring between side wall 36 of body 12 and the corresponding securing members.

Considering base portion 106 and in particular its flat length, spring 100 has free extremities which lie on opposite sides of the free length of base portion 106.

A calliper for a disc brake according to this invention will be described below with particular reference to the assembled configuration of the body, the pads and the springs as described above.

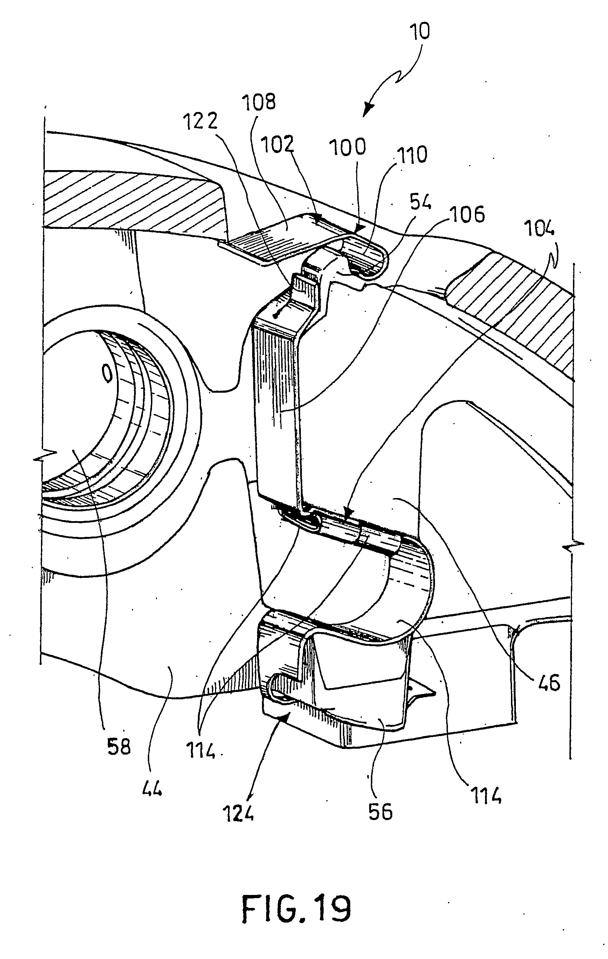

With reference for example to Figure 19, springs 100 are inserted in body 12. In the case where spring 100 is provided with a loop 112 and hooking portions as previously described, loop 112 is inserted into housing 50, preferably in such a way as to come into contact with the walls bounding it. Base portion 106 of spring 100 is located parallel to contact surface 48 of containment wall 46, preferably bearing against it. Connecting portion 110 follows outer surface 46a of containment wall 46, as a result of which outer tooth 54 is inserted in opening 120 of connecting portion 110 and bent lengths 122 deform on the two opposite sides of outer tooth 54.

Second hooking portion 124 envelops the inner extremity of containment wall 46 and in particular follows the inner surface 46b of containment wall 46. Inner tooth 56 is inserted into opening 126 or, in other words, between the two limbs 128a, 128b of the length bent into an "L" shape. Bent lengths 130 deform elastically against the adjacent sides of inner tooth 56 immobilising the inner extremity of the spring.

Inclined walls 108 and tangs 114 are in a configuration which is not elastically deformed because pad 14 is absent.

With reference for example to Figure 15, the pad is inserted in the space defined by body 12 in a radial direction and on the opposite side with respect to connecting members 38. Subsequently the pad is inserted into housing seat 44 between the two springs 100 in a direction parallel to the axis of rotation of the disc.

Bearing surface 22 of supporting plate 16 interacts with inclined wall 108 of spring 100 deforming it elastically outwards in such a way that first thrust portion 102 generates a force against the pad having a component directed towards the axis of rotation of the disc and a component directed towards the other spring.

Similarly walls 24 of supporting plate 16, if provided, are inserted into housing 50 of the body and into loop 112 of spring 100 elastically deforming tangs 114 in such a way that second thrust portion 104 generates a force on the pad having a component directed towards the axis of rotation of the disc and a component directed towards the other spring.

Inner bearing surface 30 of wing 24 is thrust against the walls bounding housing 50, with spring 100 in between, by the action of both inclined wall 108 and tongues 114.

What is described above, as for example illustrated in Figure 6, corresponds to the assembled configuration of the calliper at a stage during which no braking force is applied.

It will be appreciated from the above that the provision of a pad and a body according to this invention makes it possible to stabilise the pad avoiding vibration and noise in the course of the stage during which no braking force is applied. This invention is however capable of stabilising the pad in its seat in the braking stage too, in which one of the springs undergoes greater compression through the tangential drag effect exerted by the disc on the pad.

It is clear that variants and/or additions to what has been described and illustrated above may be provided.

Naturally, in order to implement the invention described above a person skilled in the art could make many modifications, adaptations and replacements of components with others that are functionally equivalent in order to satisfy specific contingent requirements without thereby going beyond the scope of the following claims.

## Claims

1. spring (100) for a calliper (10) of a-disc brake, the said spring comprising a cut and bent blade which extends along a curvilinear overall line (116), the said spring comprising at least two portions (102,104) capable of interacting with the supporting plate (16) for the pad (14) to transmit a force with components directed towards the axis of rotation of the disc and towards the opposite spring acting on the same pad in the assembled configuration of the disc brake,
**characterised by**
the said spring being suitable for being located between one side (16c) of a supporting plate (16) for a pad (14) and the walls of a body (12) of a calliper (10) to hold the pad compressed between two springs and against the walls of the calliper body,
said spring comprising portions (118,124) which hook to the body (12) of the calliper and are suitable for acting together with securing members (54,56) on the body (12) of the calliper.

2. Spring according to claim 1, comprising a base portion (106) from opposite sides of which extend a first thrust portion (102) and a second thrust portion (104), without any break in continuity, obtained by bending the blade comprising the spring.

3. Spring according to claim 2, in which the first thrust portion (102) corresponds to an outer extremity of the spring, with reference to the spring assembled in the calliper body, and is suitable for acting on an outer bearing surface (22) of the supporting plate (16).

4. Spring according to claim 3, in which the first thrust portion (102) is suitable for acting on an outer bearing surface (22) of extensions (20) of the supporting plate (16),

5. Spring according to claim 3 or 4, in which the first thrust portion (102) comprises an inclined wall (108) suitable for bearing against the bearing surface (22) of the supporting plate. (16) and connected to the base portion (106) through a bent connecting portion (110) and which in the configuration in which the spring is assembled with the calliper (10) is capable of moving away from both the base portion (106) and the pad (14) in a radial and tangential direction towards the exterior of the body (12).

6. Spring according to one of claims 2 to 5, in which the base, portion (106) and the first thrust portion (102) define a hook-shaped length which is suitable for bearing against the supporting plate (16) for the pad (14).

7. Spring according to claim 3 or 4, in which in the configuration in which the spring (100) is assembled with the calliper (10) the connecting portion (110) is suitable for displacing the point from which the inclined wall (108) extends from the connecting portion (110) into a more outer zone which is radially and tangentially further from the pad (14) in comparison with the base portion (106) to form a resilient length which compresses the pad (14) inwards against the body (12) of the calliper and tangentially between the two springs acting on the same pad.

8. Spring according to one of claims 2 to 7, in which the first thrust portion (102) has a "C"-shaped length which extends substantially from one side of the base portion (106), one extremity of the first thrust portion (102) being located on the opposite side to the other thrust portion with respect to the base portion (106).

9. Spring according to one of claims 2 to 8, in which the second thrust portion (104) corresponds to a central portion of the spring (100) and is suitable for acting on a central length of the side (16c) of the supporting plate (16).

10. Spring according to claim 9, in which the second thrust portion (104) is suitable for acting on an outer bearing surface (32) of a wing (24) of the supporting plate (16).

11. Spring according to claim 9 or 10, in which the second thrust portion (104) extends from the base portion (106) on the opposite side with respect to the first thrust portion (102).

12. Spring according to claim 11, in which-the base portion (106) has a loop (112) which is suitable for enclosing a corresponding wing (24) of the pad (14), the said second thrust portion (104) being constructed in the length of the spring defining the loop (112).

13. Spring according to claim 11, in which the base portion (106) comprises a flat length and a loop (112) which extends from the same side of the flat length of the base portion (106) with respect to the first thrust portion (102), the said second thrust portion (104) being constructed in the length of the spring defining the loop (112).

14. Spring according to one of claims 9 to 13, in which the second thrust portion (104) comprises at least one tang (114) which extends in a direction transverse to the curvilinear overall line (116) defining the extent of the spring.

15. Spring according to claim 14, in which two tangs (114) which are suitable for being bent through approximately 180° with respect to the base portion (106) are provided and extend from opposite sides of the overall line (116).

16. Spring according to claim 15, in which the two tangs (114) are offset along the overall line (116).

17. Spring according to claim 5, in which a first hooking portion (118) comprises a length of the connecting portion (110) of the first thrust portion (102) which is suitable for being inserted between an outer tooth (54) and a side wall (36) of the body (12) to immobilise the spring (100) in a direction parallel to the axis of rotation of the disc in the assembled configuration of the brake.

18. Spring according to claim 17, in which the connecting portion (110) has dimensions transverse to the overall line (116) of the spring which are similar to those of the base portion (106) and the inclined wall (108) and is cut in such a way as to define an opening (120) suitable for housing the outer tooth (54).

19. Spring according to claim 18, in which the said opening (120) has an extension which is smaller than the width of the connecting portion (110) in a direction transverse to the overall line (116) and is open on one side of the connecting portion (110).

20. Spring according to claim 18 or 19, in which the connecting portion (110) comprises bent lengths (122) which at least partly bound the opening (120), these bent lengths being suitable for being located on the sides of the outer tooth (54).

21. Spring according to claim 20, in which the connecting portion(110) has a first line of cut (110a) which extends parallel to the overall line (116) of the spring (110) and a further line of cut (110b) perpendicular to the first line of cut (110a) and the overall line (116) and which opens out on the edge of the connecting portion (110), the first line of cut (110a) and the other line of cut (110b) defining a "T" shaped cut in the connecting portion (110) which bounds the bent lengths (122) .

22. Spring according to one of claims 1 to 21, in which a second hooking portion (124) comprises a portion of the inner extremity of the spring (100) which extends from a base portion (106) and is suitable for being inserted between an inner tooth (56) and a side wall (36) of the body (12) of the calliper immobilising the inner extremity of the spring (100) in a direction parallel to the axis of rotation of the disc in the assembled configuration of the brake.

23. Spring according to claim 22, in which the second hooking portion (124) extends with continuity from the base portion (106), being bent substantially into an "L" shape to enclose one extremity of the containing wall (46) of the seat (44) housing a pad (14).

24. Sparing according to claim 22 or 23, in which the said hooking portion (124) has smaller dimensions transverse to the overall line (116) of the spring than those of the base portion (106), being cut in such a way as to define an opening (126) which is suitable for housing an inner tooth (56) of the body (12) in order to immobilise movements of the inner extremity of the spring (100) in a tangential direction (t).

25. Spring according to claim 24, in which the second hooking portion (124) is cut into an "L" shape, a first limb (128a) of the "L" being suitable for being located between the inner tooth (56) and a side wall (36) of the body (12) of the calliper and a second limb (128b) of the "L" being suitable for enclosing one side of the inner tooth (56).

26. Spring according to claim 24, in which the second hooking portion (124) is cut into an "L" shape, a first limb (128a) of the "L" being parallel to the overall line (116) and a second limb (128b) of the "L" being transverse to the overall line (116).

27. Spring according to claim 25 or 26, in which the second hooking portion (124) comprises bent lengths(130) which at least partly bound the opening (126) corresponding to the inner tooth (56), the said bent lengths (128) being suitable for being located on the sides of the inner tooth (56).

28. spring according to one of claims from 1 to 27, in which the spring (100) has a width, that is a dimension in the direction transverse to the overall line (116), which is substantially constant along the overall line with the exception of the two hooking portions whose dimensions are suitable for inserting the length of the spring between the side wall (36) of the body (12) and the corresponding securing members.

29. Spring according to one of claims 2 to 28, in which the free extremities of the spring are located on opposite sides of a flat length of the base portion (106).

30. Calliper for a disc brake comprising at least one pad (14), one body (12) suitable for housing the said at least one pad and at least one spring according to one of claims 1 to 29 suitable for being located between one side of the pad (14) and walls of the body (12).

## Patentansprüche

1. Feder (100) für einen Bremssattel (10) einer Scheibenbremse, wobei die Feder ein geschnittenes und gebogenes Blatt umfasst, welches sich entlang einer gekrümmten Gesamtlinie (116) erstreckt, wobei die Feder wenigstens zwei Abschnitte (102, 104) umfasst, die in der Lage sind, mit der Unterstützungsplatte (16) für den Belag (14) zusammenzuwirken, um eine Kraft mit Komponenten, die in Richtung der Drehachse der Scheibe und in Richtung der gegenüberliegenden Feder, welche auf den gleichen Belag im montierten Zustand der Scheibenbremse wirkt, zu übertragen,
**dadurch gekennzeichnet, dass**
- die Feder geeignet ist, zwischen einer Seite (16c) einer Unterstützungsplatte (16) für einen Belag (14) und den Wänden eines Körpers (12) eines Bremssattels (10) angeordnet zu werden, um den Belag zwischen zwei Federn und gegen die Wände des Bremssattelkörpers zusammengedrückt zu halten,
- die Feder Abschnitte (118, 124) umfasst, welche sich an den Körper (12) des Bremssattels haken, und welche geeignet sind, mit Sicherungsbauteilen (54, 56) an dem Körper (12) des Bremssattels zusammen zu wirken.

2. Feder nach Anspruch 1, umfassend einen Basisabschnitt (106) von dessen entgegengesetzten Seiten sich ein erster Druckabschnitt (102) und ein zweiter Druckabschnitt (104) ohne irgendeine Kontinuitätsunterbrechung erstrecken, welche durch Biegen des Blattes, das die Feder umfasst, erhalten werden.

3. Feder nach Anspruch 2, wobei der erste Druckabschnitt (102) einer äußeren Extremität der Feder in Bezug auf die in dem Bremssattelkörper montierte Feder entspricht und geeignet ist, auf eine äußere Anlagefläche (22) der Unterstützungsplatte (16) zu wirken.

4. Feder nach Anspruch 3, wobei der erste Druckabschnitt (102) geeignet ist, auf eine äußere Anlagefläche (22) von Fortsätzen (20) der Unterstützungsplatte (16) zu wirken.

5. Feder nach Anspruch 3 oder 4, wobei der erste Druckabschnitt (102) eine geneigte Wand (108) umfasst, die geeignet ist, gegen die Anlagefläche (22) der Unterstützungsplatte (16) zu drücken, und mit dem Basisabschnitt (106) mittels eines gebogenen Verbindungsabschnitts (110) verbunden ist, und welche in dem Zustand, in welchem die Feder an dem Bremssattel (10) montiert ist, in der Lage ist, sich sowohl von dem Basisabschnitt (106) als auch von dem Belag (14) in eine radiale und tangentiale Richtung, in Richtung zum Äußeren des Körpers (12), weg zu bewegen.

6. Feder nach einem der Ansprüche 2 bis 5, wobei der Basisabschnitt (106) und der erste Druckabschnitt (102) einen hakenförmigen Längenabschnitt definieren, welcher geeignet ist, gegen die Unterstützungsplatte (16) für den Belag (14) zu drücken.

7. Feder nach Anspruch 3 oder 4, wobei in dem Zustand, in welchem die Feder (100) an dem Bremssattel (10) montiert ist, der Verbindungsabschnitt (110) geeignet ist, den Punkt zu verlagern, von welchem sich die geneigte Wand (108) von dem Verbindungsabschnitt (110) in eine weiter äußere Zone erstreckt, welche radial und tangential weiter von dem Belag (14) im Vergleich mit dem Basisabschnitt (106) entfernt ist, um einen elastischen Längenabschnitt zu bilden, welcher den Belag (14) nach innen gegen den Körper (12) des Bremssattels und tangential zwischen die beiden Federn, die auf den gleichen Belag wirken, zusammendrückt.

8. Feder nach einem der Ansprüche 2 bis 7, wobei der erste Druckabschnitt (102) einen "C"-förmigen Längenabschnitt aufweist, der sich im Wesentlichen von einer Seite des Basisabschnitts (106) erstreckt, wobei eine Extremität des ersten Druckabschnitts (102) an der entgegengesetzten Seite zu dem anderen Druckabschnitt mit Bezug auf den Basisabschnitt (106) angeordnet ist.

9. Feder nach einem der Ansprüche 2 bis 8, wobei der zweite Druckabschnitt (104) einem mittleren Abschnitt der Feder (100) entspricht und geeignet ist, auf den mittleren Längenabschnitt auf der Seite (16c) der Unterstützungsplatte (16) zu wirken.

10. Feder nach Anspruch 9, wobei der zweite Druckabschnitt (104) geeignet ist, auf die äußere Anlagefläche (32) eines Flügels (24) der Unterstützungsplatte (16) zu wirken.

11. Feder nach Anspruch 9 oder 10, wobei der zweite Druckabschnitt (104) sich von dem Basisabschnitt (106) auf der entgegengesetzten Seite mit Bezug auf den ersten Druckabschnitt (102) erstreckt.

12. Feder nach Anspruch 11, wobei der Basisabschnitt (106) eine Schleife (112) aufweist, die geeignet ist, einen entsprechenden Flügel (24) des Belags (14) zu umschließen, wobei der zweite Druckabschnitt (104) in dem Längenabschnitt der Feder, der die Schleife (112) definiert, konstruiert ist.

13. Feder nach Anspruch 11, wobei der Basisabschnitt (106) einen flachen Längenabschnitt und eine Schleife (112) umfasst, die sich von der gleichen Seite des flachen Längenabschnitts des Basisabschnitts (106) mit Bezug auf den ersten Druckabschnitt (102) erstreckt, wobei der zweite Druckabschnitt (104) in dem Längenabschnitt der Feder, der die Schleife (112) definiert, konstruiert ist.

14. Feder nach einem der Ansprüche 9 bis 13, wobei der zweite Druckabschnitt (104) wenigstens eine Griffzunge (114) umfasst, welche sich in eine Richtung quer zu der gekrümmten Gesamtlinie (116) erstreckt, die die Erstreckung der Feder definiert.

15. Feder nach Anspruch 14, wobei zwei Griffzungen (114), welche geeignet sind, um um ungefähr 180° bezüglich des Basisabschnitts (106) gebogen zu werden, bereitgestellt sind und sich von gegenüberliegen Seiten der Gesamtlinie (116) erstrecken.

16. Feder nach Anspruch 15, wobei die beiden Griffzungen (114) entlang der Gesamtlinie (116) einen Versatz aufweisen.

17. Feder nach Anspruch 5, wobei ein erster Hakenabschnitt (118) einen Längenabschnitt des Verbindungsabschnitts (110) des ersten Druckabschnitts (102) umfasst, welcher geeignet ist, zwischen einen äußeren Zahn (54) und einer Seitenwand (36) des Körpers (12) eingefügt zu werden, um die Feder (100) in eine Richtung parallel zu der Drehachse der Scheibe in dem montierten Zustand der Bremse unbeweglich zu machen.

18. Feder nach Anspruch 17, wobei der Verbindungsabschnitt (110) Abmessungen quer zu der Gesamtlinie (116) der Feder aufweist, die ähnlich zu jenen des Basisabschnitts (106) und der geneigten Wand (108) sind, und derart geschnitten ist, um eine Öffnung (120) zu definieren, die geeignet ist, den äußeren Zahn (54) aufzunehmen.

19. Feder nach Anspruch 18, wobei die Öffnung (120) eine Erstreckung aufweist, die kleiner als die Breite des Verbindungsabschnitts (110) in einer Richtung quer zu der Gesamtlinie (116) ist, und an einer Seite des Verbindungsabschnitts (110) offen ist.

20. Feder nach Anspruch 18 oder 19, wobei der Verbindungsabschnitt (110) gebogene Längenabschnitte (122) umfasst, die die Öffnung (120) zumindest teilweise umgrenzen, wobei diese gebogenen Längenabschnitte geeignet sind, um an den Seiten des äußeren Zahns (54) angeordnet zu werden.

21. Feder nach Anspruch 20, wobei der Verbindungsabschnitt (110) eine erste Schnittlinie (110a), die sich parallel zu der Gesamtlinie (116) der Feder (110) erstreckt, und eine weitere Schnittlinie (110b), senkrecht zu der ersten Schnittlinie (110a) und der Gesamtlinie (116), aufweist, und welche sich an dem Rand des Verbindungsabschnitts (110) aufweitet, wobei die erste Schnittlinie (110a) und die andere Schnittlinie (110b) einen "T"-förmigen Schnitt in dem Verbindungsabschnitt (110) definieren, welcher die gebogenen Längenabschnitte (122) umgrenzt.

22. Feder nach einem der Ansprüche 1 bis 21, wobei ein zweiter Hakenabschnitt (124) einen Abschnitt der inneren Extremität der Feder (100) umfasst, welcher sich von einem Basisabschnitt (106) erstreckt und geeignet ist, zwischen einen inneren Zahn (56) und eine Seitenwand (36) des Körpers (12) des Bremssattels eingefügt zu werden, wodurch die innere Extremität der Feder (100) in eine Richtung parallel zu der Drehachse der Scheibe in dem montierten Zustand der Bremse unbeweglich gemacht wird.

23. Feder nach Anspruch 22, wobei sich der zweite Hakenabschnitt (124) kontinuierlich von dem Basisabschnitt (106) erstreckt, wobei er im Wesentlichen in eine "L"-Form gebogen ist, um eine Extremität der Umfassungswand (46) des Sitzes (44), welcher einen Belag (14) aufnimmt, zu umschließen.

24. Feder nach Anspruch 22 oder 23, wobei der Hakenabschnitt (124) quer zu der Gesamtlinie (116) der Feder kleinere Abmessungen aufweist als jene des Basisabschnitts (106), wobei er derart gebogen ist, um eine Öffnung (126) zu definieren, welche geeignet ist, einen inneren Zahn (56) des Körpers (12) aufzunehmen, um Bewegungen der inneren Extremität der Feder (100) in einer tangentiale Richtung (t) zu verhindern.

25. Feder nach Anspruch 24, wobei der zweite Hakenabschnitt (124) in eine "L"-Form geschnitten ist, wobei ein erster Schenkel (128a) von dem "L" geeignet ist, zwischen dem inneren Zahn (56) und einer Seitenwand (36) des Körpers (12) des Bremssattels angeordnet zu werden, und wobei ein zweiter Schenkel (128b) von dem "L" geeignet ist, eine Seite des inneren Zahns (56) zu umschließen.

26. Feder nach Anspruch 24, wobei der zweite Hakenabschnitt (124) in eine "L"-Form geschnitten ist, wobei ein erster Schenkel (128a) von dem "L" parallel zu der Gesamtlinie (116) ist, und ein zweiter Schenkel (128b) von dem "L" quer zu der Gesamtlinie (116) ist.

27. Feder nach Anspruch 25 oder 26, wobei der zweite Hakenabschnitt (124) gebogene Längenabschnitte (130) umfasst, die wenigstens teilweise die Öffnung (126), welche dem inneren Zahn (56) entspricht, umgrenzen, wobei die gebogenen Längenabschnitte (128) geeignet sind, an den Seiten des inneren Zahns (56) angeordnet zu werden.

28. Feder nach einem der Ansprüche 1 bis 27, wobei die Feder (100) eine Breite aufweist, die eine Abmessung in der Richtung quer zu der Gesamtlinie (116) ist, welche im Wesentlichen entlang der Gesamtlinie konstant ist, mit der Ausnahme der zwei Hakenabschnitte, deren Abmessungen geeignet sind, den Längenabschnitt der Feder zwischen die Seitenwand (36) des Körpers (12) und die entsprechenden Sicherungsbauteile einzufügen.

29. Feder nach einem der Ansprüche 2 bis 28, wobei die freien Extremitäten der Feder auf gegenüberliegen Seiten eines flachen Längenabschnitts des Basisabschnitts (106) angeordnet sind.

30. Bremssattel für eine Scheibenbremse umfassend wenigstens einen Belag (14), einen Körper (12), der geeignet ist, den wenigstens einen Belag aufzunehmen, und wenigstens eine Feder nach einem der Ansprüche 1 bis 29, die geeignet ist, zwischen einer Seite des Belags (14) und Wänden des Körpers (12) angeordnet zu werden.

## Revendications

1. Ressort (100) pour un étrier (10) de frein à disque, ledit ressort comprenant une lame coupée et courbée qui s'étend le long d'une ligne curviligne globale (116), ledit ressort comprenant au moins deux parties (102, 104) capables d'interagir avec la plaque de support (16) pour que le patin (14) transmette une force avec des composantes dirigées vers l'axe de rotation du disque et vers le ressort opposé agissant sur le même patin dans la configuration assemblée du frein de disque, **caractérisé en ce que**
ledit ressort convient à une mise en place entre un côté (16c) d'une plaque de support (16) d'un patin (14) et les parois d'un corps (12) d'un étrier (10) pour maintenir le patin comprimé entre deux ressorts et contre les parois du corps d'étrier, et
ledit ressort comprend des parties (118, 124) qui s'accrochent au corps (12) de l'étrier et conviennent à une action conjointe avec les éléments de fixation (54, 56) sur le corps (12) de l'étrier.

2. Ressort selon la revendication 1, comprenant une partie de base (106) des côtés opposés de laquelle s'étendent une première partie de poussée (102) et une seconde partie de poussée (104), sans aucune rupture de continuité, obtenus en courbant la lame comprenant le ressort.

3. Ressort selon la revendication 2, dans lequel la première partie de poussée (102) correspond à une extrémité externe du ressort, en référence au ressort assemblé dans le corps d'étrier, et convient à une action sur la surface d'appui externe (22) de la plaque de support (16).

4. Ressort selon la revendication 3, dans lequel la première partie de poussée (102) convient à une action sur une surface d'appui externe (22) d'extensions (20) de la plaque de support (16).

5. Ressort selon la revendication 3 ou 4, dans lequel la première partie de poussée (102) comprend une paroi inclinée (108) qui convient à un appui contre la surface d'appui (22) de la plaque de support (16) et raccordée à la partie de base (106) via une partie de raccordement courbée (110) et qui, dans la configuration dans laquelle le ressort est assemblé avec l'étrier (10), est capable de s'écarter à la fois de la partie de base (106) et du patin (14) dans une direction radiale et tangentielle vers l'extérieur du corps (12).

6. Ressort selon l'une quelconque des revendications 2 à 5, dans lequel la partie de base (106) et la première partie de poussée (102) définissent un segment en forme de crochet qui convient à un appui contre la plaque de support (16) pour le patin (14).

7. Ressort selon la revendication 3 ou 4, dans lequel, dans la configuration dans laquelle le ressort (100) est assemblé avec l'étrier (10), la partie de raccordement (110) convient pour déplacer le point à partir duquel la paroi inclinée (108) s'étend de la partie de raccordement (110) dans une zone plus externe qui est radialement et tangentiellement plus éloignée du patin (14) par rapport à la partie de base (106) pour former un segment élastique qui comprime le patin (14) vers l'intérieur contre le corps (12) de l'étrier et tangentiellement entre les deux ressorts agissant sur le même patin.

8. Ressort selon l'une quelconque des revendications 2 à 7, dans lequel la première partie de poussée (102) a un segment en forme de "C" qui s'étend sensiblement d'un côté de la partie de base (106), une extrémité de la première partie de poussée (102) se trouvant sur le côté opposé à l'autre partie de poussée par rapport à la partie de base (106).

9. Ressort selon l'une quelconque des revendications 2 à 8, dans lequel la seconde partie de poussée (104) correspond à une partie centrale du ressort (100) et convient à une action sur un segment central du côté (16c) de la plaque de support (16).

10. Ressort selon la revendication 9, dans lequel la seconde partie de poussée (104) convient à une action sur une surface d'appui externe (32) d'une aile (24) de la plaque de support (16).

11. Ressort selon la revendication 9 ou 10, dans lequel la seconde partie de poussée (104) s'étend de la partie de base (106) sur le côté opposé par rapport à la première partie de poussée (102).

12. Ressort selon la revendication 11, dans lequel la partie de base (106) a une boucle (112) qui convient pour enserrer une aile (24) correspondante du patin (14), ladite seconde partie de poussée (104) étant construite dans la longueur du ressort définissant la boucle (112).

13. Ressort selon la revendication 11, dans lequel la partie de base (106) comprend un segment plat et une boucle (112) qui s'étend du même côté du segment plat de la partie de base (106) par rapport à la première partie de poussée (102), ladite seconde partie de poussée (104) étant construite dans la longueur du ressort définissant la boucle (112).

14. Ressort selon l'une quelconque des revendications 9 à 13, dans lequel la seconde partie de poussée (104) comprend au moins un tenon (114) qui s'étend dans une direction transversale à la ligne curviligne globale (116) définissant l'étendue du ressort.

15. Ressort selon la revendication 14, dans lequel deux tenons (114) qui conviennent à une courbure d'environ 180° par rapport à la partie de base (106) sont mis en oeuvre et s'étendent des côtés opposés de la ligne globale (116).

16. Ressort selon la revendication 15, dans lequel les deux tenons (114) sont décalés le long de la ligne globale (116).

17. Ressort selon la revendication 5, dans lequel une première partie d'accrochage (118) comprend un segment de la partie de raccordement (110) de la première partie de poussée (102) qui convient à une insertion entre une dent externe (54) et une paroi latérale (36) du corps (12) pour immobiliser le ressort (100) dans une direction parallèle à l'axe de rotation du disque dans la configuration assemblée du frein.

18. Ressort selon la revendication 17, dans lequel la partie de raccordement (110) a des dimensions transversales à la ligne globale (116) du ressort qui sont similaires à celles de la partie de base (106) et de la paroi inclinée (108) et est coupée de manière à définir une ouverture (120) convenant au logement de la dent externe (54).

19. Ressort selon la revendication 18, dans lequel ladite ouverture (120) a une extension qui est plus petite que la largeur de la partie de raccordement (110) dans une direction transversale à la ligne globale (116) et est ouverte d'un côté de la partie de raccordement (110).

20. Ressort selon la revendication 18 ou 19, dans lequel la partie de raccordement (110) comprend des segments incurvés (122) qui se lient au moins en partie à l'ouverture (120), ces segments incurvés convenant à une mise en place sur les côtés de la dent externe (54).

21. Ressort selon la revendication 20, dans lequel la partie de raccordement (110) a une première ligne de coupe (110a) qui s'étend parallèlement à la ligne globale (116) du ressort (110) et une autre ligne de coupe (110b) perpendiculaire à la première ligne de coupe (110a) et à la ligne globale (116) et qui s'ouvre sur le bord de la partie de raccordement (110), la première ligne de coupe (110a) et l'autre ligne de coupe (110b) définissant une coupe en forme de "T" dans la partie de raccordement (110) qui délimite les segments incurvés (122).

22. Ressort selon l'une quelconque des revendications 1 à 21, dans lequel une seconde partie d'accrochage (124) comprend une partie de l'extrémité interne du ressort (100) qui s'étend d'une partie de base (106) et convient à une insertion entre une dent interne (56) et une paroi latérale (36) du corps (12) de l'étrier immobilisant l'extrémité interne du ressort (100) dans une direction parallèle à l'axe de rotation du disque dans la configuration assemblée du frein.

23. Ressort selon la revendication 22, dans lequel la seconde partie d'accrochage (124) s'étend de manière continue de la partie de base (106), étant incurvée sensiblement en forme de "L" pour enserrer une extrémité de la paroi de confinement (46) du siège (44) logeant un patin (14).

24. Ressort selon la revendication 22 ou 23, dans lequel ladite partie d'accrochage (124) a des dimensions transversales à la ligne globale (116) du ressort inférieures à celles de la partie de base (106), étant coupée de manière à définir une ouverture (126) qui convient au logement d'une dent interne (56) du corps (12) afin d'immobiliser les mouvements de l'extrémité interne du ressort (100) dans une direction tangentielle (t).

25. Ressort selon la revendication 24, dans lequel la seconde partie d'accrochage (124) est coupée en forme de "L", une première branche (128a) du "L" convenant à une mise en place entre la dent interne (56) et une paroi latérale (36) du corps (12) de l'étrier et une seconde branche (128b) du "L" convenant à l'insertion d'un côté de la dent interne (56).

26. Ressort selon la revendication 24, dans lequel la seconde partie d'accrochage (124) est coupée en forme de "L", une première branche (128a) du "L" étant parallèle à la ligne globale (116) et une seconde branche (128b) du "L" étant transversale à la ligne globale (116).

27. Ressort selon la revendication 25 ou 26, dans lequel la seconde partie d'accrochage (124) comprend des segments incurvés (130) qui, au moins en partie, délimitent l'ouverture (126) correspondant à la dent interne (56), lesdits segments incurvés (128) convenant à une mise en place sur les côtés de la dent interne (56).

28. Ressort selon l'une quelconque des revendications 1 à 27, dans lequel le ressort (100) a une largeur, qui est une dimension dans la direction transversale à la ligne globale (116), qui est sensiblement constante le long de la ligne globale à l'exception de deux parties d'accrochage dont les dimensions conviennent pour insérer le segment du ressort entre la paroi latérale (36) du corps (12) et les éléments de fixation correspondants.

29. Ressort selon l'une quelconque des revendications 2 à 28, dans lequel les extrémités libre du ressort se trouvent sur les côtés opposés d'un segment plat de la partie de base (106).

30. Etrier pour frein à disque comprenant au moins un patin (14), un corps (12) convenant au logement dudit au moins un patin et au moins un ressort selon l'une quelconque des revendications 1 à 29 convenant à une mise en place entre un côté du patin (14) et les parois du corps (12).
